# EUROPÄISCHE PATENTANMELDUNG

(11) **EP 4 235 607 A1**
(43) Veröffentlichungstag der Anmeldung: **30.08.2023**
(21) Anmeldenummer: 22158134.1
(22) Anmeldetag: 23.02.2022
(51) Int. Cl.: G07F 17/00, G07F 9/10, G07F 11/00, G07F 11/16, G07F 11/62, A47B 47/00, A47B 57/00

(54) **ARZNEIMITTEL-KOMMISSIONIER-VORRICHTUNG**

(71) Anmelder: Becton Dickinson Rowa Germany GmbH, 53539 Kelberg (DE)
(72) Erfinder: GROSS, Dietmar, 53539 Kelberg (DE); MARTINI, Heinrich Paul, 56761 Brachtendorf (DE); GERTEN, Markus, 54293 Trier (DE)
(74) Vertreter: Zenz Patentanwälte Partnerschaft mbB

(57) **Zusammenfassung**

Die Erfindung betrifft eine Arzneimittel-Kommissionier-Vorrichtung (1), aufweisend wenigstens eine Regalvorrichtung (7) und wenigstens ein bewegbares Regalbediengerät (6) zum Einlagern von Arzneimittelpackungen und zum Entnehmen von eingelagerten Arzneimittelpackungen, wobei die wenigstens eine Regalvorrichtung (7) zwei Vertikalstreben (8a, 8b), eine Rückwand (4), welche mit dem Vertikalstreben-Paar (8) lösbar verbunden ist, zwei Seitenwandelementen (9a, 9b), welche jeweils mit einer zugeordneten Vertikalstrebe (8a, 8b) lösbar verbunden sind, und wenigstens einen Lagerboden (10) aufweist. Der wenigstens eine Lagerboden (10) weist zwei abgerundet oder abgeschrägt verlaufend ausgebildete Eckabschnitt (10e, 10f) auf, welche von jeweiligen Lagerboden-Stützen (8c) der zwei Vertikalstreben (8a, 8b) derart abgestützt werden, dass der zwischen den abgerundet oder abgeschrägt verlaufenden Eckabschnitten (10e, 10f) verlaufende Seitenrand (10a) des wenigstens einen Lagerbodens (10) an der Rückwand (4) bündig anliegend angeordnet ist.

## Beschreibung

Die Erfindung betrifft eine Arzneimittel-Kommissionier-Vorrichtung mit wenigstens einer Regalvorrichtung und wenigstens einem bewegbaren Regalbediengerät zum Einlagern von Arzneimittelpackungen und zum Entnehmen von eingelagerten Arzneimittelpackungen.

Automatisierte oder zumindest teilautomatisierte Arzneimittel-Kommissionier-Vorrichtungen sind aus dem Stand der Technik bekannt und werden in Apotheken eingesetzt, um Arzneimittelpackungen platzsparend lagern zu können. Dabei werden die Arzneimittelpackungen in den bekannten, für Apotheken geeigneten Arzneimittel-Kommissionier-Vorrichtungen chaotisch oder sortenrein gelagert, wodurch insbesondere durch die chaotische Lagerung ein überflüssiges Leervolumen vermieden werden kann und wodurch die Anzahl an gelagerten Arzneimittelpackungen erheblich erhöht werden kann.

Während die Art der Lagerung der Arzneimittelpackungen weitestgehend optimiert erscheint, bietet die konstruktive Gestaltung der Regalvorrichtung einer Arzneimittel-Kommissionier-Vorrichtung Raum für eine Optimierung der Lagerkapazität. Es ist daher die Aufgabe der vorliegenden Erfindung, eine Arzneimittel-Kommissionier-Vorrichtung bereitzustellen, bei welcher die Lagerkapazität sowohl optimiert als auch erhöht wird.

Diese Aufgabe wird erfindungsgemäß gelöst durch eine Arzneimittel-Kommissionier-Vorrichtung mit den Merkmalen gemäß dem Patentanspruch 1.

Die erfindungsgemäße Arzneimittel-Kommissionier-Vorrichtung weist wenigstens eine Regalvorrichtung und wenigstens ein bewegbares Regalbediengerät zum Einlagern von Arzneimittelpackungen und zum Entnehmen von eingelagerten Arzneimittelpackungen auf. Dabei umfasst die wenigstens eine Regalvorrichtung wenigstens ein Vertikalstreben-Paar mit zwei Vertikalstreben, welche jeweils sich länglich erstreckend ausgebildet sind, eine Rückwand, welche mit dem Vertikalstreben-Paar verbunden ist und an welcher die zwei Vertikalstreben parallel beabstandet zueinander angeordnet sind, wenigstens ein Seitenwandelemente-Paar mit zwei Seitenwandelementen, welche jeweils plattenförmig ausgebildet sind und welche jeweils mit einer zugeordneten Vertikalstrebe lösbar verbunden sind, und wenigstens einen Lagerboden, welcher vier geradlinig verlaufende Seitenränder aufweist und welcher zwischen den Seitenwandelementen angeordnet ist. Jede der zwei Vertikalstreben weist eine Vielzahl von Lagerboden-Stützen auf, die in Längsrichtung der jeweiligen Vertikalstrebe hintereinanderliegend ausgebildet sind, wobei jedes der zwei Seitenwandelemente eine Vielzahl von Lagerboden-Aufnahmen aufweist, die in Längsrichtung des jeweiligen Seitenwandelements hintereinanderliegend ausgebildet sind. Ferner weist der wenigstens eine Lagerboden zwei abgerundet oder abgeschrägt verlaufend ausgebildete Eckabschnitte auf. Dabei sind zwei sich gegenüberliegend angeordnete Seitenränder des wenigstens einen Lagerbodens zumindest abschnittsweise an jeweilige Lagerboden-Aufnahmen der zwei Seitenwandelemente abgestützt angeordnet, wobei jeweilige Lagerboden-Stützen der zwei Vertikalstreben die zwei abgerundet oder abgeschrägt verlaufend ausgebildeten Eckabschnitte des wenigstens einen Lagerbodens tragend abstützend ausgebildet sind.

Vorteilhafte und zweckmäßige Ausgestaltungen und Weiterbildungen der Erfindung ergeben sich aus den entsprechenden Unteransprüchen.

Durch die Erfindung wird eine Arzneimittel-Kommissionier-Vorrichtung zur Verfügung gestellt, welche sich durch eine einfache Konstruktion auszeichnet. Dadurch, dass jeweilige Lagerboden-Stützen der zwei Vertikalstreben die zwei abgerundet oder abgeschrägt verlaufend ausgebildeten Eckabschnitte des wenigstens einen Lagerbodens derart tragend abstützen, dass der zwischen den abgerundet oder abgeschrägt verlaufenden Eckabschnitten verlaufende Seitenrand des wenigstens einen Lagerbodens in sehr geringem Abstand zu der Rückwand anliegend angeordnet werden kann, wird der Raum in einer horizontalen Ebene zwischen den beiden Vertikalstützen bis hin zu der Rückwand optimal ausgenutzt, um ein Maximum an Arzneimittelpackungen zu lagern, so dass die Lagerkapazität gegenüber bekannten Arzneimittel-Kommissionier-Vorrichtungen vorteilhaft erhöht ist.

Eine optimale Raumausnutzung ist in Ausgestaltung der Erfindung dadurch vorgesehen, dass jeweilige Lagerboden-Stützen der zwei Vertikalstreben die zwei abgerundet oder abgeschrägt verlaufend ausgebildeten Eckabschnitte des wenigstens einen Lagerbodens derart tragend abstützend ausgebildet sind, dass der zwischen den abgerundet oder abgeschrägt verlaufenden Eckabschnitten verlaufende Seitenrand des wenigstens einen Lagerbodens an der Rückwand bündig anliegend angeordnet ist.

Zur optimalen Raumausnutzung sieht die Erfindung in Ausgestaltung ferner vor, dass eine jeweilige Vertikalstrebe mit einem Zentralabschnitt ausgebildet ist, an welchem ein jeweiliges Seitenwandelement lösbar befestigt ist und von welchem aus sich ein erster Stützflügel und ein zweiter Stützflügel spiegelsymmetrisch zueinander erstrecken, und wobei die Vielzahl der Lagerboden-Stützen an dem ersten Stützflügel und dem zweiten Stützflügel ausgebildet sind. Eine jeweilige Vertikalstrebe übernimmt somit eine Vielzahl von Funktionen, wobei eine jeweilige Vertikalstrebe unter anderem zur lösbaren Befestigung eines Seitenwandelement, zum Tragen von Eckabschnitten des Lagerbodens und zur Anbringung der Rückwand dient und zusätzlich zur Stabilität der Regalvorrichtung beiträgt.

Zur Erhöhung der Funktionalität einer jeweiligen Vertikalstrebe und damit zur optimalen Raumnutzung ist in weiterer Ausgestaltung der Erfindung vorgesehen, dass der erste Stützflügel und der zweite Stützflügel jeweils einen Verbindungsabschnitt, welcher mit der Rückwand verbunden ist, und einen Stützabschnitt, welcher einen zugeordneten abgerundet oder abgeschrägt verlaufend ausgebildeten Eckabschnitt des Lagerbodens trägt, aufweist.

Besonders raumsparend ist dabei in Ausgestaltung der Erfindung eine kompakte Anordnung, bei welcher der Verbindungsabschnitt zwischen dem Stützabschnitt und dem Zentralabschnitt liegend ausgebildet ist.

Zur Verbindung einer jeweiligen Vertikalstrebe mit der Rückwand ist es in weiterer Ausgestaltung der Erfindung von Vorteil, wenn der Verbindungsabschnitt parallel zu der Rückwand verlaufend angeordnet ist und an der Rückwand anliegt, und wobei sich der Stützabschnitt unter einem spitzen Winkel zu dem Verbindungsabschnitt in eine von der Rückwand wegweisende Richtung erstreckt.

Für eine raumsparende Anordnung und für ein Optimum an Lagerfläche sieht die Erfindung in weiterer Ausgestaltung vor, dass sich der jeweilige abgeschrägt verlaufend ausgebildete Eckabschnitt des Lagerbodens unter einem spitzen Winkel zu dem zwischen den zwei Eckabschnitten liegenden und an der Rückwand bündig anliegend angeordneten Seitenrand des Lagerbodens in eine von der Rückwand wegweisende Richtung erstreckt.

Zur sicheren Abstützung des Lagerbodens ist es dabei von Vorteil, wenn der spitze Winkel eines jeweiligen abgeschrägt verlaufend ausgebildeten Eckabschnitts größer ist als der spitze Winkel eines jeweiligen Stützabschnitts.

Zur Erhöhung der Kompaktheit und optimalen Raumausnutzung trägt ferner in Ausgestaltung der Erfindung bei, dass eine jeweilige Lagerboden-Stütze der Vielzahl der Lagerboden-Stützen als ein Einschnitt in dem jeweiligen Stützabschnitt ausgebildet ist, und wobei der abgerundet oder abgeschrägt verlaufend ausgebildete Eckabschnitt in den Einschnitt eingesteckt angeordnet ist.

Hinsichtlich einer optimalen Raumausnutzung und einer weiteren Erhöhung der Kompaktheit sieht die Erfindung in Ausgestaltung vor, dass ein Seitenrand des jeweiligen Seitenwandelements mit einer zugeordneten Vertikalstrebe lösbar verbunden ist und ein der zugeordneten Vertikalstrebe gegenüberliegender Seitenrand des jeweiligen Seitenwandelements mit einem ersten Auflageabschnitt und einem zweiten Auflageabschnitt ausgebildet ist, wobei sich der erste Auflageabschnitt und der zweite Auflagenabschnitt von dem entsprechenden Seitenrand aus in entgegengesetzte Richtungen und parallel zu der Rückwand erstrecken, und wobei die Vielzahl von Lagerboden-Aufnahmen als Schlitze in dem ersten Auflageabschnitt und dem zweiten Auflageabschnitt ausgebildet sind.

Zur Erhöhung der Kompaktheit trägt auch bei, wenn der Lagerboden nur punktuell abgestützt gehalten ist, wobei die Erfindung diesbezüglich in weiterer Ausgestaltung vorsieht, dass zumindest ein Abschnitt eines ersten Seitenrands des Lagerbodens, der sich von einem der abgerundet oder abgeschrägt verlaufenden Eckabschnitte in eine von der Rückwand wegweisende Richtung erstreckt, auf dem ersten Auflageabschnitt abgestützt aufliegend angeordnet ist, und wobei zumindest ein Abschnitt eines zweiten Seitenrands des Lagerbodens, der sich von dem anderen der abgerundet oder abgeschrägt verlaufenden Eckabschnitte in eine von der Rückwand wegweisende Richtung erstreckt, auf dem zweiten Auflageabschnitt abgestützt aufliegend angeordnet ist.

Die erfindungsgemäße Arzneimittel-Kommissionier-Vorrichtung ist vorteilhafterweise modular aufgebaut, wobei hierzu in Ausgestaltung der Erfindung eine erste Regalreihe vorgesehen ist, bei welcher mehrere Regalvorrichtungen nebeneinanderliegend angeordnet sind.

Zur Sicherstellung der Stabilität der ersten Regalreihe sieht die Erfindung in Ausgestaltung vor, dass wenigstens eine Längsstrebe vorgesehen ist, welche sich quer zu den Vertikalstreben der ersten Regalreihe erstreckt und welche mit den Vertikalstreben der ersten Regalreihe lösbar verbunden ist.

Eine zusätzliche Möglichkeit zur modularen Erweiterung der Arzneimittel-Kommissionier-Vorrichtung ist in Ausgestaltung der Erfindung durch eine zweite Regalreihe vorgesehen, bei welcher mehrere Regalvorrichtungen nebeneinanderliegend angeordnet sind und welche der ersten Regalreihe gegenüberliegend angeordnet ist, wobei die erste Regalreihe und die zweite Regalreihe beabstandet zueinander angeordnet sind und eine Gasse zur Bewegung des vor der ersten Regalreihe und der zweiten Regalreihe bewegbaren Regalbediengerätes ausbilden.

Zur Sicherstellung der Stabilität der zweiten Regalreihe ist ebenso in Ausgestaltung der Erfindung vorgesehen, dass wenigstens eine Längsstrebe vorgesehen ist, welche sich quer zu den Vertikalstreben der zweiten Regalreihe erstreckt und welche mit den Vertikalstreben der zweiten Regalreihe lösbar verbunden ist.

Zur Erstellung einer rahmenartigen Struktur mit hoher Stabilität bei zwei Regalreihen sieht die Erfindung in weiterer Ausgestaltung vor, dass wenigstens eine Querstrebe vorgesehen ist, welche eine der zwei Vertikalstreben der ersten Regalreihe und eine der zwei Vertikalstreben der zweiten Regalreihe miteinander lösbar verbindet.

Schließlich sieht die Erfindung in weiterer Ausgestaltung vor, dass ein jeweiliges Seitenwandelemente-Paar und ein jeweiliges Vertikalstreben-Paar von zwei nebeneinanderliegend angeordneten Regalvorrichtungen eine gemeinsam von den zwei nebeneinanderliegend angeordneten Regalvorrichtungen genutzte Vertikalstrebe und ein gemeinsam von den zwei nebeneinanderliegend angeordneten Regalvorrichtungen genutztes Seitenwandelement aufweisen. Somit werden aufgrund der Nutzung von einem gemeinsam genutzten Seitenwandelement und einer gemeinsam genutzten Vertikalstrebe bei zwei nebeneinanderangeordneten Regalvorrichtungen insgesamt nur drei Vertikalstreben und drei Seitenwandelemente benötigt, was in vorteilhafter Weise die Anzahl an Bauteilen und damit die Kosten reduziert.

Es versteht sich, dass die vorstehend genannten und nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Der Rahmen der Erfindung ist nur durch die Ansprüche definiert.

Weitere Einzelheiten, Merkmale und Vorteile des Gegenstandes der Erfindung ergeben sich aus der nachfolgenden Beschreibung im Zusammenhang mit der Zeichnung, in der beispielhaft ein bevorzugtes Ausführungsbeispiel der Erfindung dargestellt ist.

In der Zeichnung zeigt:
Figur 1 eine Perspektivansicht auf eine Arzneimittel-Kommissionier-Vorrichtung,
Figur 2 eine Perspektivansicht auf eine erfindungsgemäße Regalvorrichtung,
Figur 3 eine weitere Perspektivansicht auf die erfindungsgemäße Regalvorrichtung,
Figur 4 eine vergrößerte Darstellung eines Kopfbereichs der erfindungsgemäßen Regalvorrichtung,
Figur 5 eine vergrößerte Perspektivansicht auf einen oberen Bereich der erfindungsgemäßen Regalvorrichtung,
Figur 6 eine perspektivische Einzelteildarstellung der erfindungsgemäßen Regalvorrichtung,
Figur 7 eine Draufsicht auf die erfindungsgemäße Regalvorrichtung mit zwei vergrößerten Detaildarstellungen,
Figur 8 eine perspektivische Ansicht auf eine Vertikalstrebe der erfindungsgemäßen Regalvorrichtung,
Figur 9 eine andere perspektivische Ansicht auf die Vertikalstrebe der erfindungsgemäßen Regalvorrichtung,
Figur 10 eine perspektivische Detailansicht auf ein Seitenwandelement der erfindungsgemäßen Regalvorrichtung,
Figur 11 eine weitere perspektivische Detailansicht auf das Seitenwandelement mit einem daran abgestützten Lagerboden, und
Figur 12 eine geschnittene Detailansicht auf das Seitenwandelement.

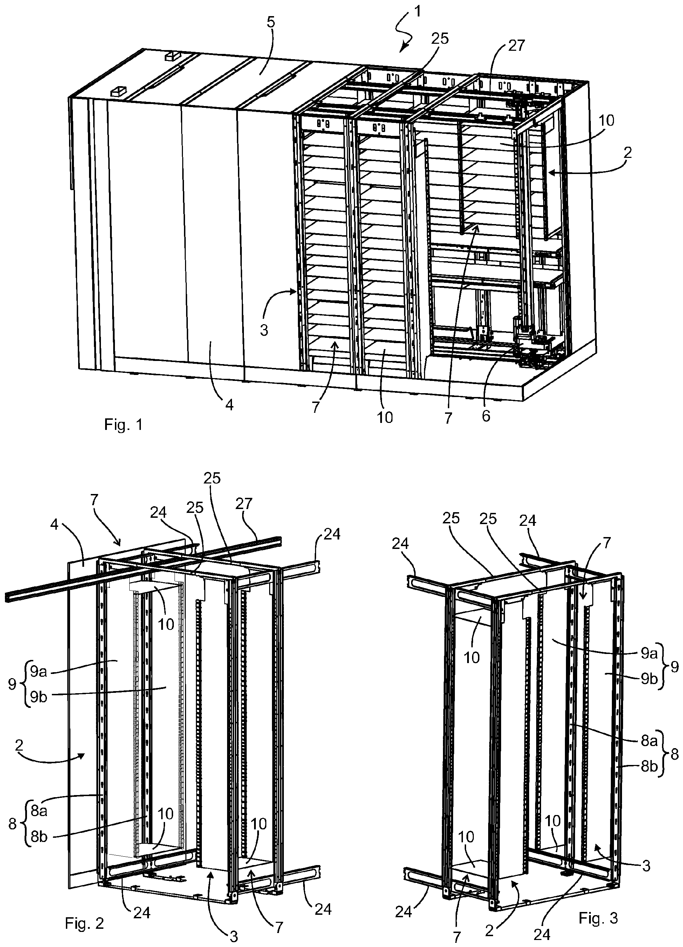

Die Figur 1 zeigt eine Arzneimittel-Kommissionier-Vorrichtung 1 mit einer ersten Regalreihe 2 und einer zweiten Regalreihe 3, wobei in dem gezeigten Ausführungsbeispiel die zweite Regalreihe 3 der ersten Regalreihe 2 gegenüberliegend angeordnet ist. Das Innenleben der Arzneimittel-Kommissionier-Vorrichtung 1 ist normalerweise von einer Vielzahl von Rückwänden 4 und Deckenwänden 5 verdeckt, wobei in Figur 1 einige der Rückwände 4 und der Deckenwände 5 ausgeblendet sind, um zumindest einen Teileinblick in das Innere der Arzneimittel-Kommissionier-Vorrichtung 1 zu ermöglichen. Vor der ersten Regalreihe 2 ist ein bewegbares Regalbediengerät angeordnet, welches zum Einlagern von Arzneimittelpackungen und zum Entnehmen von eingelagerten Arzneimittelpackungen ausgebildet ist. Die Arzneimittelpackungen sind dabei entweder in der ersten und/oder zweiten Regalreihe 2, 3 eingelagert oder werden dort eingelagert. Die erste Regalreihe 2 und die zweite Regalreihe 3 sind bei dem dargestellten Ausführungsbeispiel beabstandet zueinander angeordnet und bilden eine Gasse zur Bewegung des vor der ersten Regalreihe 2 und der zweiten Regalreihe 3 bewegbaren Regalbediengerätes 6 aus. Auch wenn in dem dargestellten Ausführungsbeispiel zwei Regalreihen gezeigt sind, so kann eine Arzneimittel-Kommissionier-Vorrichtung auch nur eine einzige Regalreihe aufweisen. Sowohl die erste Regalreihe 2 als auch die zweite Regalreihe 3 weisen in dem dargestellten Ausführungsbeispiel mehrere Regalvorrichtungen 7 auf, welche alle im Wesentlichen identisch aufgebaut sind. Bei der ersten Regalreihe 2 sind mehrere Regalvorrichtungen 7 nebeneinanderliegend angeordnet, wobei auch bei der zweiten Regalreihe 3 mehrere Regalvorrichtungen 7 nebeneinanderliegend angeordnet sind. Auch wenn in dem dargestellten Ausführungsbeispiel eine jeweilige Regalreihe mehrere Regalvorrichtungen aufweist, sei angemerkt, dass eine Regalreihe auch nur eine einzige Regalvorrichtung aufweisen kann.

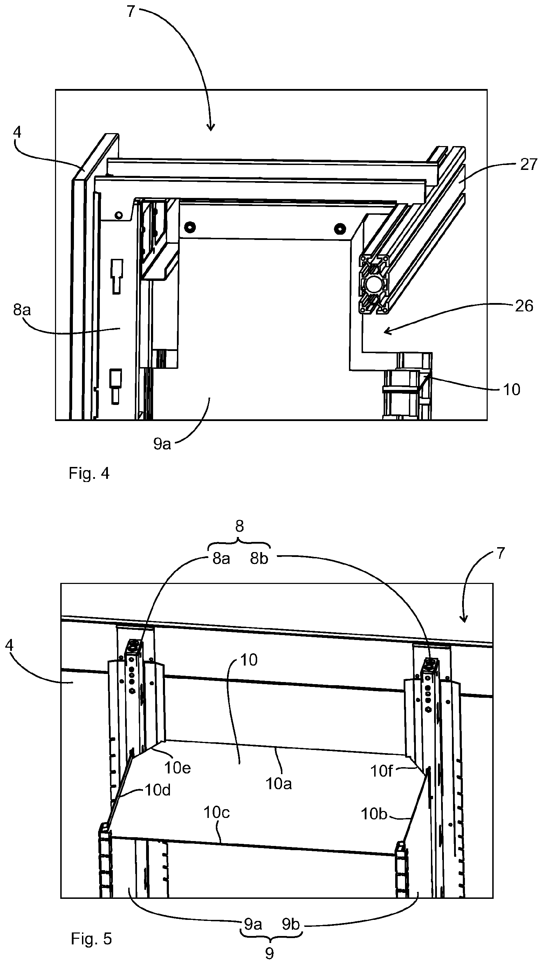

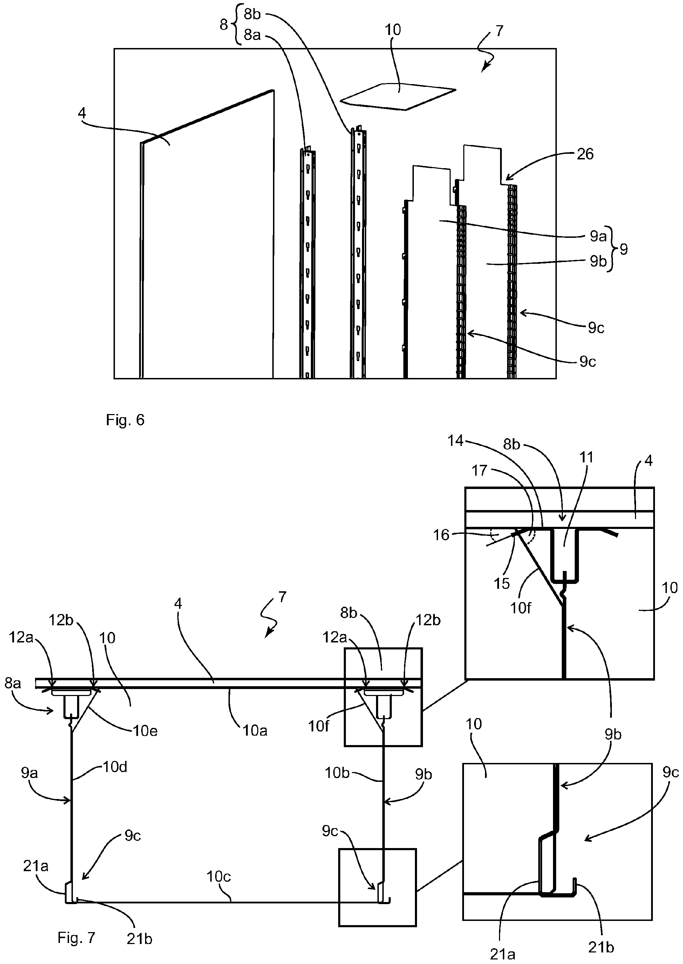

In den Figuren 2 bis 11 sind nähere Details einer jeweiligen Regalvorrichtung 7 der Arzneimittel-Kommissionier-Vorrichtung 1 dargestellt. Die Figuren 2 und 3 zeigen zwei sich gegenüberliegend angeordnete Regalvorrichtungen 7, wobei eine der beiden Regalvorrichtungen 7 zu der ersten Regalreihe 2 gehört, wohingegen die andere der beiden Regalvorrichtungen 7 zu der zweiten Regalreihe 3 gehört. Aus Gründen der Übersichtlichkeit ist in den Figuren 2 und 3 auf eine Darstellung von weiteren Regalvorrichtungen der Regalreihen 2 und 3 verzichtet worden. Die Figur 5 zeigt eine vergrößerte Perspektivansicht auf einen oberen Bereich einer Regalvorrichtung 7, wobei alle Regalvorrichtungen 7 einer jeweiligen Regalreihe 2, 3 der Arzneimittel-Kommissionier-Vorrichtung 1 im Wesentlichen identisch aufgebaut sind, so dass nachstehend lediglich die Merkmale einer einzigen Regalvorrichtung 7 beschrieben werden. In Zusammenschau der Figur 5 und der Figur 6, welche eine perspektivische Einzelteildarstellung der Regalvorrichtung 7 zeigt, ist zu erkennen, dass die Regalvorrichtung 7 ein Vertikalstreben-Paar 8 mit zwei Vertikalstreben 8a und 8b aufweist. Die zwei Vertikalstreben 8a und 8b sind jeweils sich länglich erstreckend ausgebildet, wobei die Vertikalstreben 8a und 8b in dem dargestellten Ausführungsbeispiel identisch zueinander ausgebildet sind, was aber nicht zwingend erforderlich ist. Ferner weist die Regalvorrichtung 7 ein Seitenwandelemente-Paar 9 mit zwei Seitenwandelementen 9a und 9b auf. Die Seitenwandelemente 9a und 9b begrenzen die Regalvorrichtung 7 und sorgen dafür, dass eingelagerte Arzneimittelpackungen nicht seitlich aus der Regalvorrichtung 7 herausfallen können. Die Seitenwandelemente 9a und 9b sind jeweils plattenförmig und dünnwandig ausgebildet und jeweils mit einer zugeordneten Vertikalstrebe 8a bzw. 8b lösbar verbunden. "Zugeordnet" bedeutet in diesem Zusammenhang, dass das Seitenwandelement 9a mit der Vertikalstrebe 8a lösbar verbunden ist, wohingegen das Seitenwandelement 9b mit der Vertikalstrebe 8b lösbar verbunden ist. Der Regalvorrichtung 7 ist ferner eine Rückwand 4 zugeordnet, welche entweder nur die eine Regalvorrichtung 7 oder mehrere, nebeneinanderliegend angeordnete Regalvorrichtungen 7 nach außen hin abdeckt. Entsprechend ist die Rückwand 4 mit dem Vertikalstreben-Paar 8 verbunden, wobei die zwei Vertikalstreben 8a und 8b an der Rückwand 4 parallel beabstandet zueinander angeordnet sind. Dabei kann die Rückwand 4 mit dem Vertikalstreben-Paar 8 zum Beispiel über eine Schraubverbindung lösbar verbunden sein, wobei es auch denkbar ist, dass alternativ oder zusätzlich die Rückwand 4 mit dem Vertikalstreben-Paar 8 verklebt ist. Die Seitenwandelemente 9a und 9b sind ferner jeweils auf einer der Rückwand 4 abgewandten Seite der Vertikalstreben 8a, 8b mit der ihnen zugeordneten Vertikalstrebe 8a, 8b lösbar verbunden. Die Arzneimittelpackungen sind bei der vorliegenden Regalvorrichtung 7 auf Lagerböden 10 gelagert, wobei in den Figuren 5 und 6 exemplarisch nur ein einziger Lagerboden 10 gezeigt ist. Wie aber der Figur 1 zu entnehmen ist, kann eine Vielzahl von Lagerböden 10 für jede Regalreihe 7 vorgesehen sein, wobei die Lagerböden 10 übereinanderliegend und beabstandet zueinander angeordnet sind. Ein solcher Lagerboden 10 weist vier geradlinig verlaufende Seitenränder 10a, 10b, 10c und 10d auf. Wie den Figuren 5 und 7 zu entnehmen ist, ist der Lagerboden 10 zwischen den zwei Seitenwandelementen 9a und 9b angeordnet. Der Lagerboden 10 wird dabei nicht ausschließlich von den Seitenwandelementen 9a und 9b getragen. Vielmehr wird der Lagerboden 10 sowohl von den Vertikalstreben 8a und 8b als auch von den Seitenwandelementen 9a und 9b getragen. Zu diesem Zweck weisen die Vertikalstreben 8a und 8b jeweils eine Vielzahl von Lagerboden-Stützen 8c auf, die in Längsrichtung der jeweiligen Vertikalstrebe 8a, 8b hintereinanderliegend ausgebildet sind. Ebenso weisen die zwei Seitenwandelemente 9a, 9b jeweils eine Vielzahl von Lagerboden-Aufnahmen 9c auf, die in Längsrichtung des jeweiligen Seitenwandelements 9a, 9b hintereinanderliegend ausgebildet sind.

Charakteristisch für den Lagerboden 10 der Regalvorrichtung 7 der vorliegenden Erfindung ist es, dass der Lagerboden 10 keine vier spitzen Ecken aufweist, sondern dass der Lagerboden 10 stattdessen zwei abgerundet oder abgeschrägt verlaufend ausgebildete Eckabschnitte 10e und 10f aufweist. In dem dargestellten Ausführungsbeispiel sind die Eckabschnitte 10e und 10f abgeschrägt verlaufend ausgebildet, wobei als Alternative auch eine abgerundete Ausbildung der Eckabschnitte denkbar ist. Wie ferner aus den Figuren 5 und 7 ersichtlich ist, sind die zwei sich gegenüberliegend angeordneten Seitenränder 10b und 10d des Lagerbodens 10 zumindest abschnittsweise an jeweilige Lagerboden-Aufnahmen 9c der zwei Seitenwandelemente 9a, 9b abgestützt angeordnet, wobei der Lagerboden 10 insbesondere im Bereich seiner nicht abgerundeten oder nicht abgeschrägten Eckabschnitte gelagert ist. Hingegen stützen die jeweiligen Lagerboden-Stützen 8c der zwei Vertikalstreben 8a und 8b die zwei abgeschrägt verlaufend ausgebildeten Eckabschnitte 10e und 10f des Lagerbodens 10 derart tragend ab, dass der zwischen den abgeschrägt verlaufenden Eckabschnitten 10e und 10f verlaufende Seitenrand 10a des Lagerbodens 10 an der Rückwand 4 bündig anliegend angeordnet ist, wie insbesondere aus Figur 7 hervorgeht. Dabei stützen die Lagerboden-Stützen 8c ausschließlich die abgeschrägt verlaufend ausgebildeten Eckabschnitte 10e und 10f des Lagerbodens 10 ab.

In Zusammenschau der Figuren 5 bis 9 ist zu erkennen, dass eine jeweilige Vertikalstrebe 8a, 8b mit einem Zentralabschnitt 11 ausgebildet ist. Der Zentralabschnitt 11 ist als eine im Querschnitt betrachtete U-förmige Hohlprofilschiene ausgebildet. Der Zentralabschnitt 11 dient zur lösbaren Befestigung eines der beiden Seitenwandelemente 9a, 9b, wobei zu diesem Zweck in dem die beiden Schenkel der U-förmigen Hohlprofilschiene verbindenden Schenkel mehrere Aufnahmeausnehmungen 20 ausgebildet sind, auf die später noch genauer eingegangen wird. Von dem Zentralabschnitt 11 aus erstrecken sich ein erster Stützflügel 12a und ein zweiter Stützflügel 12b. Genauer gesagt erstreckt sich der erste Stützflügel 12a von einem freien Ende der beiden Schenkel der U-förmigen Profilschiene und der zweite Stützflügel 12b von dem anderen freien Ende des Schenkels der U-förmigen Profilschiene aus. Ferner erstrecken sich der erste Stützflügel 12a und der zweite Stützflügel 12b in Bezug auf eine Ebene, welche senkrecht zu der Rückwand 4 verläuft, spiegelsymmetrisch zueinander. Die Lagerboden-Stützen 8c sind dabei an dem ersten Stützflügel 12a und an dem zweiten Stützflügel 12b ausgebildet. Der erste Stützflügel 12a weist einen Verbindungsabschnitt 14, welcher mit der Rückwand 4 verbunden ist, und einen Stützabschnitt 15, welcher den zugeordneten und abgeschrägt verlaufend ausgebildeten Eckabschnitt 10e, bzw. 10f des Lagerbodens 10 trägt, auf. Ebenso umfasst der zweite Stützflügel 12b einen Verbindungsabschnitt 14, welcher mit der Rückwand 4 verbunden ist, und einen Stützabschnitt 15, welcher den zugeordneten und abgeschrägt verlaufend ausgebildeten Eckabschnitt 10e, bzw. 10f des Lagerbodens 10 trägt. Sowohl bei dem ersten Stützflügel 12a als auch bei dem zweiten Stützflügel 12b ist der Verbindungsabschnitt 14 zwischen dem Stützabschnitt 15 und dem Zentralabschnitt 11 liegend ausgebildet. Dabei erstreckt sich ein jeweiliger Stützabschnitt 15 schräg in eine von dem Verbindungsabschnitt 14 wegweisende Richtung und in eine zu dem Zentralabschnitt 11 hinweisende Richtung.

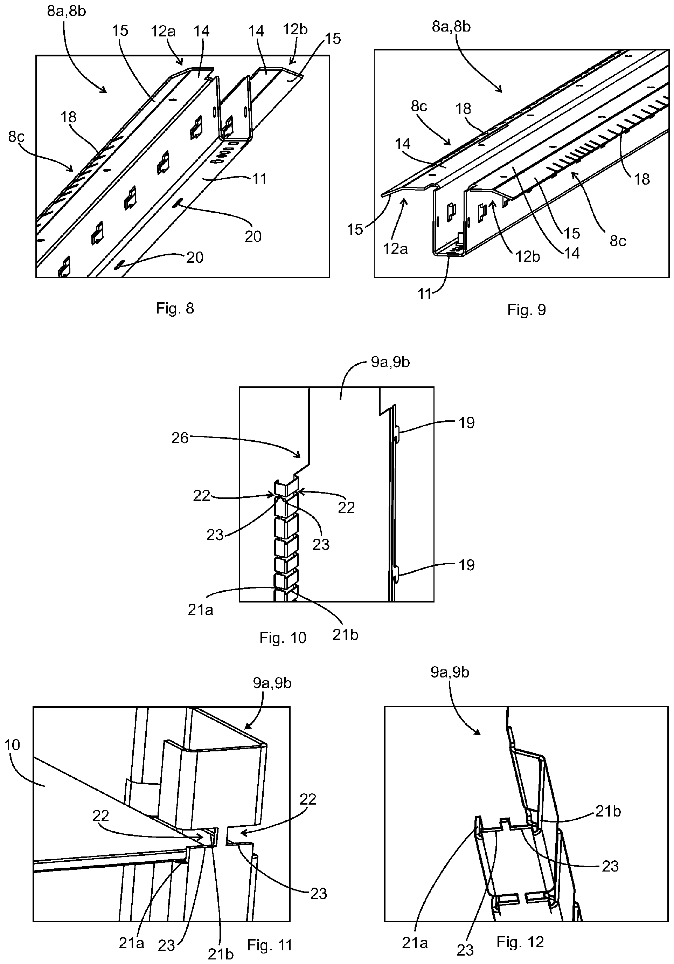

Insbesondere der Figur 7 ist zu entnehmen, dass der Verbindungsabschnitt 14 parallel zu der Rückwand 4 verlaufend angeordnet ist und an der Rückwand 4 anliegt. Demgegenüber erstreckt sich der Stützabschnitt 15 unter einem spitzen Winkel 16 zu dem Verbindungsabschnitt 14 in eine von der Rückwand 4 wegweisende Richtung. Ebenso ist aus der Figur 7 zu ersehen, dass sich der jeweilige abgeschrägt verlaufend ausgebildete Eckabschnitt 10e bzw. 10f des Lagerbodens 4 unter einem spitzen Winkel 17 zu dem zwischen den zwei Eckabschnitten 10e, 10f liegenden und an der Rückwand 4 bündig anliegend angeordneten Seitenrand 10a des Lagerbodens 10 in eine von der Rückwand 4 wegweisende Richtung erstreckt. Der spitze Winkel 17 eines jeweiligen abgeschrägt verlaufend ausgebildeten Eckabschnitts 10e, 10f ist dabei größer ausgebildet als der spitze Winkel 16 eines jeweiligen Stützabschnitts 15. Wie den Figuren 8 und 9 zu entnehmen ist, sind die jeweiligen Lagerboden-Stützen 8c als ein Einschnitt 18 in dem jeweiligen Stützabschnitt 15 ausgebildet, so dass der abgeschrägt verlaufend ausgebildete Eckabschnitt 10e bzw. 10f in den Einschnitt 18 eingesteckt angeordnet ist. Die abgeschrägt verlaufend ausgebildeten Eckabschnitte 10e, 10f des Lagerboden 10 zusammen mit den jeweils als Einschnitt 18 ausgebildeten Lagerboden-Stützen 8c sowie der schräg verlaufenden Ausrichtung der jeweiligen Stützabschnitte 15 erlauben ein einfaches Einschieben des Lagerbodens 10 in die zugeordneten Stützabschnitte 15, so dass der Lagerboden 10 mit seinem Seitenrand 10a bündig an der Rückwand 4 anliegt. Dabei gleichen die abgeschrägt verlaufend ausgebildeten Eckabschnitte 10e, 10f und schräg verlaufend angeordneten Stützabschnitte 15 einen ausreichenden Toleranzausgleich, damit der Lagerboden 10 sicher und stabil abgestützt gehalten ist.

Wie vorstehend bereits angesprochen, ist ein Seitenrand des jeweiligen Seitenwandelements 9a bzw. 9b mit einer zugeordneten Vertikalstrebe 8a bzw. 8b lösbar verbunden. Zu diesem Zweck sind an dem Seitenrand des jeweiligen Seitenwandelements 9a, 9b mehrere, beabstandet zueinander angeordnete Einhängehaken 19 ausgebildet. Diese Einhängehaken 19, die beispielsweise aus Figur 10 ersichtlich sind, werden bei Montage der Seitenwandelemente 9a, 9b in zugeordnete Aufnahmeausnehmungen 20 (siehe zum Beispiel Figur 8) eingesteckt, die an dem Zentralabschnitt 11 einer jeweiligen Vertikalstrebe 8a, 8b ausgeformt sind. Zur Abstützung des Lagerbodens 10 ist ein der zugeordneten Vertikalstrebe 8a, 8b gegenüberliegender Seitenrand des jeweiligen Seitenwandelements 9a, 9b mit einem ersten Auflageabschnitt 21a und einem zweiten Auflageabschnitt 21b ausgebildet. Der erste Auflageabschnitt 21a und der zweite Auflagenabschnitt 21b erstrecken sich von dem entsprechenden Seitenrand des jeweiligen Seitenwandelements 9a, 9b aus in entgegengesetzte Richtungen und parallel zu der Rückwand 4, wie beispielsweise in der Figur 7 gezeigt ist. Dabei sind die Auflageabschnitte 21a, 21b im Bereich der Ecken der Seitenränder 10b und 10c bzw. 10d und 10c ausgebildet. Mit Bezug auf Figur 7 stützt dabei der Auflageabschnitt 21b des Seitenwandelements 9a einen Abschnitt des Seitenrandes 10d und der Auflageabschnitt 21a des Seitenwandelements 9b einen Abschnitt des Seitenrandes 10b, wohingegen der Auflageabschnitt 21a des Seitenwandelements 9a und der Auflageabschnitt 21b des Seitenwandelements 9b keine Abschnitte irgendwelcher Seitenränder des Lagerbodens 10 abstützen. Vielmehr dienen der Auflageabschnitt 21a des Seitenwandelements 9a und der Auflageabschnitt 21b des Seitenwandelements 9b dazu, Abschnitte von Lagerböden von benachbarten Regalreihen abzustützen. Wie beispielsweise den Figuren 10 und 11 zu entnehmen ist, sind die Lagerboden-Aufnahmen 9c als Schlitze 22 in dem ersten Auflageabschnitt 21a und dem zweiten Auflageabschnitt 21b ausgebildet. Folglich ist zumindest ein Abschnitt des Seitenrands 10b des Lagerbodens 10, welcher sich von dem abgeschrägt verlaufenden Eckabschnitt 10f in eine von der Rückwand 4 wegweisende Richtung erstreckt, auf dem ersten Auflageabschnitt 21a abgestützt aufliegend angeordnet, wohingegen zumindest ein Abschnitt des Seitenrands 10d des Lagerbodens 10, welcher sich von dem anderen abgeschrägt verlaufenden Eckabschnitt 10e in eine von der Rückwand 4 wegweisende Richtung erstreckt, auf dem zweiten Auflageabschnitt 21b abgestützt aufliegend angeordnet ist.

Aus den vorstehenden Ausführungen ergibt sich, dass bei Verwendung nur einer Regalreihe immer einer der beiden Auflageabschnitte 21a oder 21b eines Seitenwandelements 9a oder 9b nicht genutzt wird. Beide Auflageabschnitte 21a oder 21b eines Seitenwandelements 9a oder 9b werden dann genutzt, wenn mehrere Regalvorrichtungen 7 nebeneinander angeordnet sind und eine Regalreihe bilden. Dementsprechend weisen ein jeweiliges Seitenwandelemente-Paar 9 und ein jeweiliges Vertikalstreben-Paar 8 von zwei nebeneinanderliegend angeordneten Regalvorrichtungen 7 eine gemeinsam von den zwei nebeneinanderliegend angeordneten Regalvorrichtungen 7 genutzte Vertikalstrebe 8a oder 8b und ein gemeinsam von den zwei nebeneinanderliegend angeordneten Regalvorrichtungen genutztes Seitenwandelement 9a oder 9b auf.

Um zu verhindern, dass sich der Lagerboden 10 aus seiner abgestützten Position heraus in eine von der Rückwand 4 wegweisende Richtung bewegt, ist an den Lagerboden-Aufnahmen 9c zusätzlich zu dem Schlitz 22 jeweils ein Rückhaltevorsprung 23 ausgebildet, wie er aus Figur 11 ersichtlich ist. Der Rückhaltevorsprung 23 ist dabei an einem Ende eines jeweiligen Schlitzes 22 eine Bewegung des Lagerbodens 10 in eine von der Rückwand 4 wegweisende Richtung verhindernd ausgebildet.

Aus den Figuren 2 und 3 ist ferner zu erkennen, dass für eine Regalvorrichtung 7 eine Längsstrebe 24 vorgesehen ist, welche sich quer zu den Vertikalstreben 8a, 8b eines Vertikalstreben-Paars 8 erstreckt und welche mit den Vertikalstreben 8a, 8b lösbar verbunden ist. Dabei sind in den Figuren 2 und 3 jeweils zwei Längsstreben 24 für die beiden Regalreihen 2 und 3 vorgesehen, wobei bei der erste Regalreihe 2 und der zweiten Regalreiche 3 die Längsstreben sowohl bodennah als auch deckennah angeordnet sind. Jede Längsstrebe 24 kann sich dabei zumindest über den Bereich einer Regalvorrichtung 7 erstrecken, wobei sich die Längsstrebe 24 vorzugsweise über mehr als eine Regalvorrichtung 7 erstreckt. Folglich ist wenigstens eine Längsstrebe 24 vorgesehen, welche sich quer zu den Vertikalstreben 8a, 8b der ersten Regalreihe 2 erstreckt und welche mit den Vertikalstreben 8a, 8b der ersten Regalreihe 2 lösbar verbunden ist. Ebenso ist entsprechend wenigstens eine Längsstrebe 24 vorgesehen, welche sich quer zu den Vertikalstreben 8a, 8b der zweiten Regalreihe 3 erstreckt und welche mit den Vertikalstreben 8a, 8b der zweiten Regalreihe 3 lösbar verbunden ist. Die Längsstrebe 24 sorgt dabei für eine Erhöhung der Stabilität einer jeweiligen Regalvorrichtung 7.

Zur weiteren Erhöhung der Stabilität bei zwei sich gegenüberliegenden Regalreihen 7 trägt eine Querstrebe 25 bei, wie es aus den Figuren 2 bis 4 ersichtlich ist. Dabei verbindet wenigstens eine Querstrebe 25 eine der zwei Vertikalstreben 8a, 8b der ersten Regalreihe 2 und eine der zwei Vertikalstreben 8a, 8b der zweiten Regalreihe 3 lösbar miteinander. Von besonderem Vorteil ist es, wenn zwei Querstreben 25 vorgesehen sind, wobei eine der zwei Querstreben 25 in Bodennähe angeordnet ist oder sogar die Vertikalstrebe 8a, 8b gegenüber dem Boden abstützt, und die andere der zwei Querstreben 25 in Deckennähe angeordnet ist und dabei eine Abstützung für die Deckenwände 5 bietet.

Aus den Figuren 2 bis 4 ist ferner ersichtlich, dass die Seitenwandelemente 9a, 9b an einem Längsende mit einer geradlinigen Ausbuchtung 26 versehen sind. Die Ausbuchtung 26 bietet Platz für eine Bewegungsschiene 27, an welcher sich das Regalbediengerät 6 innerhalb der Arzneimittel-Kommissionier-Vorrichtung 1 und vor einer Regalvorrichtung 7 bewegen kann.

Die vorstehend beschriebene Erfindung ist selbstverständlich nicht auf die beschriebene und dargestellte Ausführungsform beschränkt. Es ist ersichtlich, dass an der in der Zeichnung dargestellten Ausführungsform zahlreiche, dem Fachmann entsprechend der beabsichtigten Anwendung naheliegende Abänderungen vorgenommen werden können, ohne dass dadurch der Bereich der Erfindung verlassen wird. Zur Erfindung gehört alles dasjenige, was in der Beschreibung enthalten und/oder in der Zeichnung dargestellt ist, einschließlich dessen, was abweichend von dem konkreten Ausführungsbeispiel für den Fachmann naheliegt.

### Bezugszeichenliste

- 1: Arzneimittel-Kommissionier-Vorrichtung
- 2: erste Regalreihe
- 3: zweite Regalreihe
- 4: Rückwände
- 5: Deckenwände
- 6: Regalbediengerät
- 7: Regalvorrichtung
- 8: Vertikalstreben-Paar
- 8a, 8b: Vertikalstreben
- 8c: Lagerboden-Stützen
- 9: Seitenwandelemente-Paar
- 9a, 9b: Seitenwandelement
- 9c: Lagerboden-Aufnahmen
- 10: Lagerboden
- 10a, 10b 10c, 10d: Seitenränder
- 10e, 10f: abgerundete oder abgeschrägte Ecken
- 11: Zentralabschnitt
- 12a, 12b: erster und zweiter Stützflügel
- 14: Verbindungsabschnitt
- 15: Stützabschnitt
- 16: spitzer Winkel von Stützabschnitt
- 17: spitzer Winkel von Ecken
- 18: Einschnitt als Lagerboden-Stütze
- 19: Einhängehaken
- 20: Aufnahmeausnehmungen
- 21a, 21b: erster und zweiter Auflageabschnitt
- 22: Schlitze
- 23: Rückhaltevorsprung
- 24: Längsstrebe
- 25: Querstrebe
- 26: geradlinige Ausbuchtung
- 27: Bewegungsschiene

## Patentansprüche

1. Arzneimittel-Kommissionier-Vorrichtung (1), aufweisend wenigstens eine Regalvorrichtung (7) und wenigstens ein bewegbares Regalbediengerät (6) zum Einlagern von Arzneimittelpackungen und zum Entnehmen von eingelagerten Arzneimittelpackungen,
wobei die wenigstens eine Regalvorrichtung (7) aufweist:
- wenigstens ein Vertikalstreben-Paar (8) mit zwei Vertikalstreben (8a, 8b), welche jeweils sich länglich erstreckend ausgebildet sind,
- eine Rückwand (4), welche mit dem Vertikalstreben-Paar (8) verbunden ist und an welcher die zwei Vertikalstreben (8a, 8b) parallel beabstandet zueinander angeordnet sind,
- wenigstens ein Seitenwandelemente-Paar (9) mit zwei Seitenwandelementen (9a, 9b), welche jeweils plattenförmig ausgebildet sind und welche jeweils mit einer zugeordneten Vertikalstrebe (8a, 8b) lösbar verbunden sind, und
- wenigstens einen Lagerboden (10), welcher vier geradlinig verlaufende Seitenränder (10a, 10b, 10c, 10d) aufweist und welcher zwischen den Seitenwandelementen (9a, 9b) angeordnet ist,
wobei jede der zwei Vertikalstreben (8a, 8b) eine Vielzahl von Lagerboden-Stützen (8c) aufweist, die in Längsrichtung der jeweiligen Vertikalstrebe (8a, 8b) hintereinanderliegend ausgebildet sind,
wobei jedes der zwei Seitenwandelemente (9a, 9b) eine Vielzahl von Lagerboden-Aufnahmen (9c) aufweist, die in Längsrichtung des jeweiligen Seitenwandelements (9a, 9b) hintereinanderliegend ausgebildet sind,
wobei der wenigstens eine Lagerboden (10) zwei abgerundet oder abgeschrägt verlaufend ausgebildete Eckabschnitte (10e, 10f) aufweist, und
wobei zwei sich gegenüberliegend angeordnete Seitenränder (10b, 10d) des wenigstens einen Lagerbodens (10) zumindest abschnittsweise an jeweilige Lagerboden-Aufnahmen (9c) der zwei Seitenwandelemente (9a, 9b) abgestützt angeordnet sind, und
wobei jeweilige Lagerboden-Stützen (8c) der zwei Vertikalstreben (8a, 8b) die zwei abgerundet oder abgeschrägt verlaufend ausgebildeten Eckabschnitte (10e, 10f) des wenigstens einen Lagerbodens (10) tragend abstützend ausgebildet sind.

2. Arzneimittel-Kommissionier-Vorrichtung (1) nach Anspruch 1, wobei die jeweilige Lagerboden-Stützen (8c) der zwei Vertikalstreben (8a, 8b) die zwei abgerundet oder abgeschrägt verlaufend ausgebildeten Eckabschnitte (10e, 10f) des wenigstens einen Lagerbodens (10) derart tragend abstützend ausgebildet sind, dass der zwischen den abgerundet oder abgeschrägt verlaufenden Eckabschnitten (10e, 10f) verlaufende Seitenrand (10a) des wenigstens einen Lagerbodens (10) an der Rückwand (4) bündig anliegend angeordnet ist.

3. Arzneimittel-Kommissionier-Vorrichtung (1) nach Anspruch 1 oder 2, wobei eine jeweilige Vertikalstrebe (8a, 8b) mit einem Zentralabschnitt (11) ausgebildet ist, an welchem ein jeweiliges Seitenwandelement (9a, 9b) lösbar befestigt ist und von welchem aus sich ein erster Stützflügel (12a) und ein zweiter Stützflügel (12b) spiegelsymmetrisch zueinander erstrecken, und wobei die Vielzahl der Lagerboden-Stützen (8c) an dem ersten Stützflügel (12a) und dem zweiten Stützflügel (12b) ausgebildet sind.

4. Arzneimittel-Kommissionier-Vorrichtung (1) nach Anspruch 3, wobei der erste Stützflügel (12a) und der zweite Stützflügel (12b) jeweils einen Verbindungsabschnitt (14), welcher mit der Rückwand (4) verbunden ist, und einen Stützabschnitt (15), welcher einen zugeordneten abgerundet oder abgeschrägt verlaufend ausgebildeten Eckabschnitt (10e, 10f) des Lagerbodens (10) trägt, aufweisen.

5. Arzneimittel-Kommissionier-Vorrichtung (1) nach Anspruch 4, wobei der Verbindungsabschnitt (14) zwischen dem Stützabschnitt (15) und dem Zentralabschnitt (11) liegend ausgebildet ist.

6. Arzneimittel-Kommissionier-Vorrichtung (1) nach Anspruch 4 oder 5, wobei der Verbindungsabschnitt (14) parallel zu der Rückwand (4) verlaufend angeordnet ist und an der Rückwand (4) anliegt, und wobei sich der Stützabschnitt (15) unter einem spitzen Winkel (16) zu dem Verbindungsabschnitt (14) in eine von der Rückwand (4) wegweisende Richtung erstreckt.

7. Arzneimittel-Kommissionier-Vorrichtung (1) nach Anspruch 6, wobei sich der jeweilige abgeschrägt verlaufend ausgebildete Eckabschnitt (10e, 10f) des Lagerbodens (10) unter einem spitzen Winkel (17) zu dem zwischen den zwei Eckabschnitten (10e, 10f) liegenden und an der Rückwand (4) bündig anliegend angeordneten Seitenrand (10a) des Lagerbodens (10) in eine von der Rückwand (4) wegweisende Richtung erstreckt.

8. Arzneimittel-Kommissionier-Vorrichtung (1) nach Anspruch 7, wobei der spitze Winkel (17) eines jeweiligen abgeschrägt verlaufend ausgebildeten Eckabschnitts (10e, 10f) größer ist als der spitze Winkel (16) eines jeweiligen Stützabschnitts (15).

9. Arzneimittel-Kommissionier-Vorrichtung (1) nach einem der vorhergehenden Ansprüche, wobei eine jeweilige Lagerboden-Stütze (8c) der Vielzahl der Lagerboden-Stützen (8c) als ein Einschnitt (18) in dem jeweiligen Stützabschnitt (15) ausgebildet ist, und wobei der abgerundet oder abgeschrägt verlaufend ausgebildete Eckabschnitt (10e, 10f) in den Einschnitt (18) eingesteckt angeordnet ist.

10. Arzneimittel-Kommissionier-Vorrichtung (1) nach einem der vorhergehenden Ansprüche, wobei ein Seitenrand des jeweiligen Seitenwandelements (9a, 9b) mit einer zugeordneten Vertikalstrebe (8a, 8b) lösbar verbunden ist und ein der zugeordneten Vertikalstrebe (8a, 8b) gegenüberliegender Seitenrand des jeweiligen Seitenwandelements (9a, 9b) mit einem ersten Auflageabschnitt (21a) und einem zweiten Auflageabschnitt (21b) ausgebildet ist, wobei sich der erste Auflageabschnitt (21a) und der zweite Auflagenabschnitt (21b) von dem entsprechenden Seitenrand aus in entgegengesetzte Richtungen und parallel zu der Rückwand (4) erstrecken, und wobei die Vielzahl von Lagerboden-Aufnahmen (9c) als Schlitze (22) in dem ersten Auflageabschnitt (21a) und dem zweiten Auflageabschnitt (21b) ausgebildet sind.

11. Arzneimittel-Kommissionier-Vorrichtung (1) nach Anspruch 10, wobei zumindest ein Abschnitt eines ersten Seitenrands (10b) des Lagerbodens (10), der sich von einem der abgerundet oder abgeschrägt verlaufenden Eckabschnitte (10f) in eine von der Rückwand (4) wegweisende Richtung erstreckt, auf dem ersten Auflageabschnitt (21a) abgestützt aufliegend angeordnet ist, und wobei zumindest ein Abschnitt eines zweiten Seitenrands (10d) des Lagerbodens (10), der sich von dem anderen der abgerundet oder abgeschrägt verlaufenden Eckabschnitte (10e) in eine von der Rückwand (4) wegweisende Richtung erstreckt, auf dem zweiten Auflageabschnitt (21b) abgestützt aufliegend angeordnet ist.

12. Arzneimittel-Kommissionier-Vorrichtung (1) nach einem der vorhergehenden Ansprüche mit einer ersten Regalreihe (2), bei welcher mehrere Regalvorrichtungen (7) nebeneinanderliegend angeordnet sind.

13. Arzneimittel-Kommissionier-Vorrichtung (1) nach Anspruch 12, wobei wenigstens eine Längsstrebe (24) vorgesehen ist, welche sich quer zu den Vertikalstreben (8a, 8b) der ersten Regalreihe (2) erstreckt und welche mit den Vertikalstreben (8a, 8b) der ersten Regalreihe (2) lösbar verbunden ist.

14. Arzneimittel-Kommissionier-Vorrichtung (1) nach Anspruch 12 oder 13 mit einer zweiten Regalreihe (3), bei welcher mehrere Regalvorrichtungen (7) nebeneinanderliegend angeordnet sind und welche der ersten Regalreihe (2) gegenüberliegend angeordnet ist, wobei die erste Regalreihe (2) und die zweite Regalreihe (3) beabstandet zueinander angeordnet sind und eine Gasse zur Bewegung des vor der ersten Regalreihe (2) und der zweiten Regalreihe (3) bewegbaren Regalbediengerätes (6) ausbilden.

15. Arzneimittel-Kommissionier-Vorrichtung (1) nach Anspruch 14, wobei wenigstens eine Querstrebe (25) vorgesehen ist, welche eine der zwei Vertikalstreben (8a, 8b) der ersten Regalreihe (2) und eine der zwei Vertikalstreben (8a, 8b) der zweiten Regalreihe (3) miteinander lösbar verbindet.

16. Arzneimittel-Kommissionier-Vorrichtung (1) nach einem der Ansprüche 12 bis 15, wobei ein jeweiliges Seitenwandelemente-Paar (9) und ein jeweiliges Vertikalstreben-Paar (8) von zwei nebeneinanderliegend angeordneten Regalvorrichtungen (7) eine gemeinsam von den zwei nebeneinanderliegend angeordneten Regalvorrichtungen (7) genutzte Vertikalstrebe (8a, 8b) und ein gemeinsam von den zwei nebeneinanderliegend angeordneten Regalvorrichtungen (7) genutztes Seitenwandelement (9a, 9b) aufweisen.
